(19) **Europäisches Patentamt**

**European Patent Office**

**Office européen des brevets**

(11) Veröffentlichungsnummer: **0 208 252 A2**

(12) **EUROPÄISCHE PATENTANMELDUNG**

(21) Anmeldenummer: 86109014.0

(22) Anmeldetag: 02.07.86

(51) Int. Cl.4: **A21D 13/02**

(30) Priorität: 02.07.85 ES 544784

(43) Veröffentlichungstag der Anmeldung:
**14.01.87 Patentblatt 87/03**

(84) Benannte Vertragsstaaten:
**DE FR GB IT**

(71) Anmelder: **Pons, José Ortola**
**c/ Purisima no. 3**
**Pego (Alicante)(ES)**

(72) Erfinder: **Pons, José Ortola**
**c/ Purisima no. 3**
**Pego (Alicante)(ES)**

(74) Vertreter: **Schmidt-Evers, Jürgen, Dipl.-Ing. et al**
**Patentanwälte Dipl.-Ing. H. Mitscherlich Dipl.-Ing. K. Gunschmann Dipl.-Ing. Dr.rer.nat. W. Körber Dipl.-Ing. J. Schmidt-Evers Dipl.-Ing. W. Melzer Postfach 26 01 32**
**D-8000 München 26(DE)**

(54) **Verfahren zur Herstellung von Brot.**

(57) Die Erfindung betrifft ein Verfahren zur Herstellung von Brot ohne Mehl.

Es wird also auf das Mahlen von Weizen-oder sonstigen Getreidekörnern verzichtet. Die Körner werden einer besonderen Vorrichtung zugeführt, in der mittels Reiben nur die sehr dünne, die äußere Kornumhüllung bedeckende Schicht abgerieben wird, ohne dabei die Körner zu spalten, so daß sie ganz als Vollkorn erhalten bleiben.

Anschließend werden die Körner mazeriert, indem sie in wassergefüllte Behälter gegeben und dort über mehrere Stunden gewässert werden, bis eine geeignete Weichheit und Sättigung mit Feuchtigkeit erreicht ist.

Mit diesen ganz erhaltenen, geweichten Körnern wird eine uniforme Masse gebildet, der Sauerteig zugesetzt wird. Diese Mischung wird Teigknet-, Wirk-, teigteilenden und teigformgebenden Maschinen zugeführt, wobei eine bestimmte Menge Mehl zugesetzt wird.

Schließlich werden die fertigen Teigstücke in den Backofen eingeführt.

## Verfahren zur Herstellung von Brot

Die Erfindung betrifft ein Verfahren zur Herstellung von Brot.

Das erfindungsgemäße Verfahren weist die Besonderheit auf, daß auf das bis jetzt notwendige Mahlen des Karpophors oder des Korns, von beispielsweise Weizen oder eines sonstigen Getreides, verzichtet wird. Hierdurch ergeben sich, wie anhand der nachfolgenden Beschreibung gezeigt wird, beachtliche Vorteile technischer, wirtschaftlicher und ernährungsphysiologischer Art.

Die traditionelle und bekannte Technik der Brotherstellung sieht vor, daß die Körner, wie beispielsweise Weizen-, Hafer-, Gersten-, Roggen-, Mais-oder sonstige Getreidekörner zunächst gemahlen werden, um sie in Mehl zu verwandeln. Anschließend wird das Mehl feingemahlen, um es zu bleichen, wobei das Perikarp und das Endokarp beziehungsweise die äußere Schale des Korns und der Kornkeim eliminiert werden, was gemeinsam die Kleie bildet.

Bei diesem System der Herstellung von weißem Mehl, bei dem die äußere Schale und der Keim von den Körnerngelöst wird, eliminiert den größten Teil der Vitamine, die vor allem im Keim enthalten sind, sowie der Proteine, Fette und anderer· wichtiger Nährstoffe, die auf diese Weise in die Kleie gelangen, die dann als Tierfutter verwendet wird. Wenn jedoch die Weiße des Brots erhalten werden soll, nimmt man eine nachträgliche Anreicherung der Mehle vor, indem sie mit vitaminischen und aleuronischen Mischungen versetzt werden oder es wird ihnen die Kleie zugesetzt. Für das Vollkornbrot unterbleibt das feine Ausmahlen der Mehle. Dies alles verteuert den Herstellungsprozeß und im häufigsten Fall der Entfernung der Kleie gehen wichtige Nähreigenschaften verloren. Außerdem geht dem Weizen durch das Mahlen die Korneinheit verloren.

Ausgehend von diesem Stand der Technik liegt der Erfindung die Aufgabe zugrunde, ein Verfahren zu schaffen, das die genannten Nachteile umgeht.

Die Lösung dieser Aufgabe erfolgt erfindungsgemäß durch die in den Patentansprüchen genannten Maßnahmen.

Das erfindungsgemäße Verfahren besteht aus den folgenden Verfahrensschritten:

Zur Vorbehandlung der Weizenkörner oder der Körner anderer Pflanzenarten werden diese einer besonders für diesen Zweck ausgebildeten Maschine zugeführt, in der mittels Reibeelemente nur die sehr dünne, die äußere Umhüllung beziehungsweise das Perikarp bedeckende Schicht abgerieben wird. Dabei werden die Körner nicht zerstört. Weder wird das Perikarp noch das Endokarp noch das Korninnere beziehungsweise der Keim abgetrennt. Die Körner bleiben als Vollkorn erhalten, das heißt die Gesamtheit des Korns bleibt bestehen. Damit sind die Voraussetzungen für den folgenden Verfahrensschritt gegeben.

Gemäß dem zweiten Verfahrensschritt werden die als Vollkorn erhaltenen und geriebenen beziehungsweise gehäuteten Körner mazeriert, indem sie in wassergefüllte Behälter ge geben werden. Dort bleiben sie eingetaucht, bis sie eine angemessene Weichheit erlangt haben, was von der Eintauchzeit und dem Feuchtigkeitsgehalt der Körner vor ihrem Wässern abhängt. In jedem Fall nimmt der Vorgang mehrere Stunden in Anspruch, bis der Kornkörper mit Feuchtigkeit gesättigt ist und eine homogene Weichheit erlangt.

Die als Vollkorn erhaltenen mazerierten Körner bilden schon im eingetauchten Zustand aufgrund ihrer Weichheit eine uniforme Masse. Dieser Masse wird in geeigneter Weise Sauerteig beziehungsweise Hefe zugesetzt und vermengt, um die Fermentierung auszulösen, bei deren Abschluß die Masse für eine bestimmte Zeit ruht. Anschließend wird die Masse Teigknet-, Teigwirk-, teigteilenden und teigformbildenden Maschinen oder Gießformmaschinen zugeführt. Das Zusetzen einer bestimmten Menge Mehls ergänzt den Prozeß oder die Behandlung der Grundmasse, die sich unmittelbar aus eingeweichten Weizenkörnern oder Körnern anderer Pflanzenarten, insbesondere Gräser, zusammensetzt. Schließlich werden die Teigstücke im Ofen gebacken.

Es ist hervorzuheben, daß bei der Bildung der Brotbackmasse gemäß der Erfindung direkt von den Weizenkörnern oder von Körnern anderer Getreidearten im unversehrten Zustand ausgegangen wird. Die Körner sind also ganz. Das sonst notwendige Mahlen zur Gewinnung des Mehls unterbleibt, was eine Ersparnis von Zeit und Kosten darstellt. Das Korn wird in seinem natürlichen Zustand erhalten. Es wird ein Vollkornbrot geschaffen, das in höchstem Maße reich an Vitaminen und Nährstoffen ist.

Zur Durchführung des beschriebenen Verfahrens können übliche geeignete Maschinen verwendet werden. Diese können auch dem Korntyp angepaßt werden, wobei Weizenkörner und andere brotbackfähige Körner Verwendung finden. Diese Anpassung der Maschinen kann von jedem Fachmann auf dem Gebiet der Brotherstellung vorgenommen werden und erfolgt entsprechend der Brotarten oder der Herstellungsweisen.

**Ansprüche**

1. Verfahren zur Herstellung von Brot,

dadurch gekennzeichnet,

daß zunächst in einer Vorphase Weizenkörner oder Körner anderer zur Herstellung von Brot geeigneter Getreidearten einer besonders ausgestalteten Vorrichtung zugeführt werden, in der mittels Reibeelemente nur die sehr dünne, die äußere Kornumhüllung bedeckende Schicht abgerieben wird, ohne dabei die Körner zu spalten, und weder das Perikarp noch das Endokarp noch den Keim von den Körnern zu lösen, so daß die Körner als Vollkorn erhalten bleiben.

2. Verfahren zur Herstellung von Brot, dadurch gekennzeichnet, daß die als Vollkorn erhaltenen Weizenkörner oder Körner anderer zur Herstellung von Brot geeigneter Getreidearten im Anschluß an die Behandlung und den Reibevorgang nach Anspruch 1 mazeriert werden, indem sie in wassergefüllte Behälter gegeben und dort über mehrere Stunden gewässert werden bis der Kornkörper völlig mit Feuchtigkeit gesättigt ist und eine homogene Weichheit erlangt.

3. Verfahren zur Herstellung von Brot, nach einem der vorhergehenden Ansprüche, dadurch gekennzeichnet, daß eine uniforme Masse mit den ganz erhaltenen geweichten Weizenkörnern oder Körnern anderer zur Herstellung von Brot geeigneter Getreidearten gebildet wird, daß dieser Masse der entsprechende Sauerteig zur Fermentierung zugesetzt und mit diesem in geeigneter Weise vermischt wird, daß diese Mischung für eine bestimmte Zeit ruht, daß ihr eine bestimmte Mehlmenge zugesetzt wird und daß die so gebildete Masse aus Vollkorn Vorrichtungen zugeführt wird, in denen sie geknetet und in einen backfähigen Zustand gebracht wird, bis sie in den Backofen eingeführt und zu Brot verbacken wird.

4. Verfahren zur Herstellung von Brot, nach einem der vorhergehenden Ansprüche, dadurch gekennzeichnet, daß die der Herstellung von Brot dienende Masse in der Weise gebildet wird, daß die Weizenkörner oder anderen Getreidekörner nach dem Reibevorgang und dem Einweichen unter Erhaltung des Vollkorns unmittelbar miteinander verbunden werden, ohne daß sie zuvor zu Mehl verarbeitet werden.

5. Verfahren zur Herstellung von Brot, gekennzeichnet durch die in der Beschreibung aufgeführten erfindungswesentlichen Merkmale zum Zwecke gewerblicher Verwendung.